# EUROPEAN PATENT SPECIFICATION

(11) **EP 0 655 147 B1**
(45) Date of publication and mention of the grant of the patent: **19.11.1997**
(21) Application number: 93918007.1
(22) Date of filing: 11.08.1993
(51) Int. Cl.: G02B 27/22

(54) **VIEWING APPARATUS INCLUDING CONTROL MEANS**
BEOBACHTUNGSVORRICHTUNG MIT STEUERUNGSVORRICHTUNG
APPAREIL DE VISUALISATION COMPRENANT UN APPAREIL DE COMMANDE

(30) Priority: 11.08.1992 GB 9216982
(43) Date of publication of application: 31.05.1995
(73) Proprietor: RICHMOND HOLOGRAPHIC RESEARCH AND DEVELOPMENT LIMITED, London E2 8NH (GB)
(72) Inventor: TRAYNER, David, John, London E2 8NH (GB); Orr, Edwina Margaret, London E2 8NH (GB)
(74) Representative: Gordon, Richard John Albert
(86) International application number: GB9301709
(87) International publication number: WO9404956

(56) References cited:
- DE-A- 4 004 739
- GB-A- 2 149 934
- US-A- 4 799 739
- PATENT ABSTRACTS OF JAPAN vol. 9, no. 327 (P-415)(2050) 21 December 1985 & JP-A-60 151 611

## Description

This invention relates to control means for viewing apparatus and, more particularly, viewing apparatus of the type disclosed in WO 93/02372.

The viewing apparatus disclosed in WO 93/02372 includes a holographic recording of a diffusely illuminated zone, means for illuminating the holographic recording from a plurality of different positions such that images of the zone are reconstructed forming viewing zones and a non-projected masking means located adjacent the holographic recording for effecting spatial modulation of light from the respective positions, the arrangement being such as to provide a plurality of viewing zones whereby the spatial modulation can be seen from a corresponding one of the zones.

A similar apparatus is disclosed in DE-A-40 04 739.

A problem associated with the prior art viewing apparatus is that the images are visible only in one position and provide no movement parallax.

The invention provides control means for the viewing apparatus and is characterised in that the control means includes means for detecting movement and position of a viewer and for controlling operation of the illuminating means so that the viewer continues to observe the images.

Therefore, a viewing apparatus provided with control means in accordance with the present invention overcomes the problem referred to above by tracking the position of the viewer and moving the viewing locations to maintain a stereo effect.

Following is a description by way of example only and with reference to the accompanying drawings, of one method of carrying the invention into effect.

In the drawings:-
Figure 1 is a diagrammatic representation of viewing apparatus including an embodiment of control means in accordance with the present invention,
Figure 2 is a diagrammatic representation of viewing apparatus including another embodiment of control means in accordance with the present invention,
Figure 3 is a side elevation of the apparatus shown in Figure 2, and
Figure 4 is a schematic diagram of the embodiment of the control means shown in Figures 2 and 3.

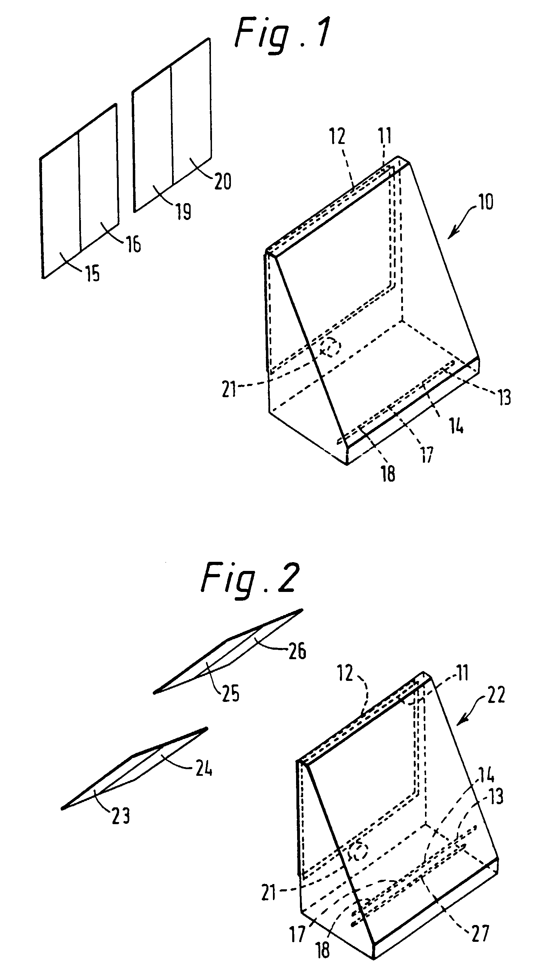

Referring now to Figure 1 of the drawings, there is shown a viewing apparatus 10 similar to the apparatus disclosed in WO 93/02372 and including a diffusing holographic optical element (HOE) 11, a liquid crystal display (LCD) 12 located adjacent the HOE 11 and a pair of lamps 13 and 14 operable alternately in rapid succession for illuminating the combined HOE 11 and LCD 12 making visible images on the LCD 12 from viewing zones 15 and 16 for right and left eyes of a viewer. When the images form a stereo pair and the right and left eyes of the viewer are at the viewing zones 15 and 16, a stereo 3-D image may be seen.

The apparatus 10 also is provided with an additional pair of lamps 17, 18 operable alternately in rapid succession for providing images of the LCD 12 at viewing zones 19, 20 for the right and left eyes of the viewer beside the viewing zones 17, 18 and a detector 21 for detecting lateral movement of the head of the viewer. Preferably, the detector 21 detects the eyes of the viewer.

The arrangement is such that operation of the pairs of lamps 13, 14 or 17, 18 is controlled by signals received from the detector 21 detecting movement of the head of the viewer laterally and substantially parallel to the plane of the HOE 11. In this manner, as the viewer moves to the left or the right the illumination changes so as to maintain the viewing zones to retain a stereo view.

It will be appreciated that, by providing additional pairs of lamps more viewing zones may be established.

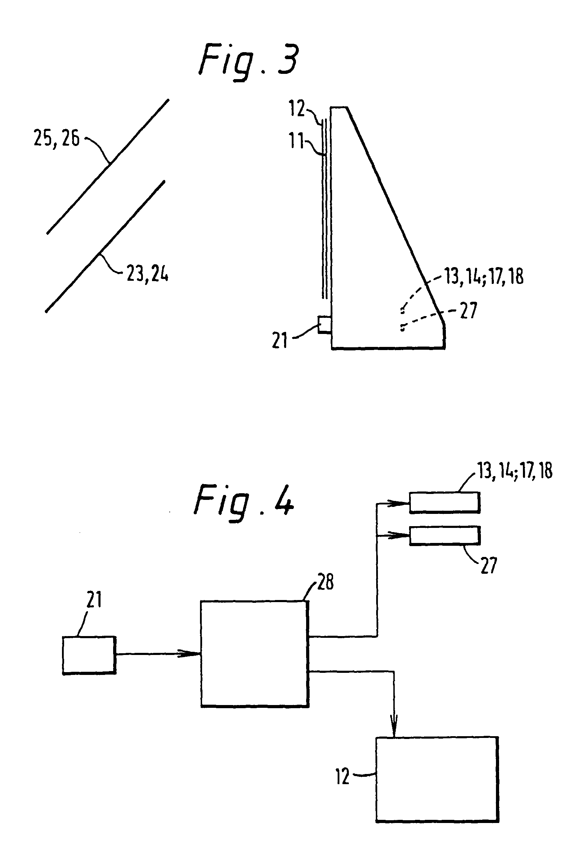

Referring now to Figures 2 and 3 of the drawings, there is shown a viewing apparatus 22 which is similar to the apparatus 10 in Figure 1 except that viewing zones, two pairs of which are shown at 23, 24 and 25, 26, are inclined relative to the HOE 11 and, in addition to the lamps 13, 14; 17, 18 and any other lamps located in the same row for establishing viewing zones in a transverse direction of the HOE 11, there is provided one or more rows of lamps, one row of which is shown at 27, spaced in a vertical direction for establishing viewing zones, e.g. 23, 24 and 25, 26, at different distances from the HOE 11.

Changes in viewing distance are compensated for by operating lamps in rows spaced vertically one from another so as to change a viewing zone from one position, e.g. 23, 24, to another position, e.g. 25, 26. As optimum viewing distance is where the eyes of a viewer lie close to a viewing zone, the higher zone 25, 26 will allow for more distant position as compared to the lower zone 23, 24, assuming that the viewer height remains constant.

In this way changes in viewer distance as well as side-to-side movement may be compensated for. It will be appreciated that the slope of the viewing zones 23, 24; 25, 26 may be arranged at a variety of angles which may incline towards the HOE 11 as illustrated or incline away from the HOE 11.

Referring now to Figure 4 of the drawings, there is shown a diagrammatic representation of the detector 21 adapted to provide signals to a computer 28, the signals being indicative of location of eyes of the or each viewer and output signals from the computer 28 control operation of the lamps 13, 14; 17,18 and 27 in accordance with the input signals from the detector 21. The computer 28 may also be adapted to control operation of the LCD 12.

It will be appreciated that, if the left and right view images on the LCD 12 visible from their respective viewing zones in the foregoing examples remain the same, the stereo effect will be retained but no parallax will be introduced. However, it will also be appreciated that, if the computer 28 alters the images so that, while the viewing zones track the viewer, the images change in such a way as to present the angle of view on the object corresponding to the viewer's position relative to the image, the viewer will have the impression of being able to look around the image. It will be understood that this can be achieved through changes in one, or any combination of the horizontal, vertical and distance parallax. It will also be understood that the source of the imagery may be computer generated or processed or be remote sensed in real time.

Furthermore, it will be appreciated that the control means in accordance with the present invention is not restricted to a single viewer. The detector 21 may be adapted to distinguish two or more viewers and to provide two or more viewing zones each for a corresponding viewer and may be adapted to track head movements of the respective viewers independently of one another. Furthermore, if four views of the object, in the form of two different stereo pairs, are displayed then it is possible for each of two viewers to see their own stereo view with parallax. In principle, the control means may provide for more than two viewers to observe stereo pairs simultaneously.

In the foregoing embodiments, the HOE 11 operates in transmission mode and it will be appreciated that, alternatively, the HOE 11 may be arranged to operate in reflection mode or in edge-lit mode, where light travels substantially within the substrate of the HOE 11.

It will also be appreciated that the viewing zones may not necessarily be arranged to provide stereo pairs but may provide mono images.

## Claims

1. A viewing apparatus (10) including a holographic recording (11) of a diffusely illuminated zone, means (13,14; 17,18) for illuminating the holographic recording (11) from a plurality of different positions such that images of the zone are reconstructed forming viewing zones (15,16; 19,20) and a non-projected masking means (12) located adjacent the holographic recording (11) for effecting spatial modulation of light from the respective positions such that conventional two dimensional images on the masking means (12) are visible from the viewing zones (15,16; 19,20) characterised by control means that includes means (21) for detecting the position and movement of a viewer and for controlling the operation of the illuminating means (13,14; 17,18) so that the viewer continues to observe the images.

2. An apparatus as claimed in Claim 1 characterised in that each image comprises component images of a stereo pair and the illumination means (13,14; 17,18) is controlled to illuminate alternate images of the stereo pair to provide a stereoscopic effect.

3. An apparatus as claimed in Claim 2 characterised in that the stereo images change with movement of the viewer so as to provide a continuous parallax effect.

4. An apparatus as claimed in any one of the preceding Claims characterised in that the images are viewable by multiple viewers.

## Patentansprüche

1. Beobachtungsvorrichtung (10), welche eine holographische Aufnahme bzw. Aufzeichnung (11) eines diffus beleuchteten Bereiches aufweist, sowie Einrichungen (13,14; 17,18) zum Beleuchten der holographischen Aufzeichnung (11) aus einer Vielzahl von verschiedenen Positionen, so daß Bilder des Bereiches derart rekonstruiert werden, daß sie Betrachtungsbereiche (15,16; 19,20) bilden, und eine nicht-projezierte Verdeckungseinrichtung (12), welche benachbart zu der holographischen Aufzeichnung (11) gelegen ist, zur Verursachung einer räumlichen Modulation von Licht von den entsprechenden Positionen, so daß konventionelle zweidimensionale Bilder auf der Verdeckungseinrichtung (12) von den Betrachtungsbereichen (15,16; 19,20) sichtbar sind,
**gekennzeichnet durch**
eine Steuereinrichtung, die eine Einrichtung (21) zur Ermittlung der Position und Bewegung eines Betrachters und zum Steuern des Betriebes der Beleuchtungseinrichtungen (13,14; 17,18) aufweist, so daß der Betrachter weiterhin die Bilder beobachtet.

2. Vorrichtung nach Anspruch 1,
**dadurch gekennzeichnet**, daß jedes Bild Einzelbilder eines Stereopaares aufweist, und die Beleuchtungseinrichtungen (13,14; 17,18) gesteuert werden, um abwechselnde Bilder des Stereopaares zu beleuchten, um einen Raumeffekt zu erzielen.

3. Vorrichtung nach Anspruch 2,
**dadurch gekennzeichnet**, daß die Stereobilder sich mit der Bewegung des Betrachters verändern, um einen kontinuierlichen Parallaxe-Effekt zu ermöglichen.

4. Vorrichtung nach einem der vorhergehenden Ansprüche,
**dadurch gekennzeichnet**, daß die Bilder für mehrere Betrachter sichtbar sind.

## Revendications

1. Appareil de visualisation (10) comportant un enregistrement holographique (11) d'une zone éclairée de façon diffuse, des moyens (13, 14 ; 17, 18) pour éclairer l'enregistrement holographique (11) à partir de plusieurs positions différentes de telle sorte que des images de la zone soient reconstituées en formant des zones de vision (15, 16 ; 19, 20), et un moyen de masquage non projeté (12) dont la position est adjacente à celle de l'enregistrement holographique (11) pour effectuer une modulation spatiale de la lumière provenant des positions respectives de telle sorte que des images classiques en deux dimensions se trouvant sur le moyen de masquage (12) soient visibles depuis les zones de vision (15, 16 ; 19, 20), caractérisé en ce qu'il comprend un moyen de commande qui comporte un moyen (21) pour détecter la position et le déplacement d'un observateur et pour commander le fonctionnement des moyens d'éclairage (13, 14 ; 17, 18) de telle sorte que l'observateur continue à voir les images.

2. Appareil selon la revendication 1, caractérisé en ce que chaque image comprend des composantes d'image d'une paire stéréo, et en ce que les moyens d'éclairage (13, 14 ; 17, 18) sont commandés de façon à éclairer alternativement les images de la paire stéréo afin de donner un effet stéréoscopique.

3. Appareil selon la revendication 2, caractérisé en ce que les images stéréo changent en fonction du déplacement de l'observateur de façon à donner un effet de parallaxe continu.

4. Appareil selon l'une quelconque des revendications précédentes, caractérisé en ce que les images peuvent être vues par plusieurs observateurs.
